**Europäisches Patentamt**

**European Patent Office**

**Office européen des brevets**

(19)

(11) Publication number: **0 164 940**

**A1**

(12)

# EUROPEAN PATENT APPLICATION

(21) Application number: **85303627.5**

(22) Date of filing: **22.05.85**

(51) Int. Cl.⁴: **F 16 J 15/12**

(30) Priority: **22.05.84 GB 8413036**

(43) Date of publication of application:
**18.12.85 Bulletin 85/51**

(84) Designated Contracting States:
**FR**

(71) Applicant: **Corrugated Packing & Sheet Metal Company Limited**
**Hamsterley**
**Newcastle-upon-Tyne, NE17 7SX(GB)**

(72) Inventor: **Nicholson, Terence Peter**
**Calf Hall Muggleswick**
**Derwentside County Durham(GB)**

(72) Inventor: **Scott, Thomas William**
**308 Silverlonnen**
**Newcastle-Upon-Tyne(GB)**

(74) Representative: **Lee, Philip Graham et al,**
**MARKS & CLERK 57/60 Lincoln's Inn Fields**
**London WC2A 3LS(GB)**

(54) Improvements relating to cylinder head gaskets.

(57) A cylinder head gasket for internal combustion engines comprises a metal sheet (1) with cylinder bore openings, stud openings (B, C) and liquid flow openings (A, D, E). Each cylinder bore opening is peripherally surrounded by a compressible metal ring (2) conveniently formed by local folding of the sheet (1) and at least some of the other openings (A, B, C, D) are surrounded by flat rings (washers) (3, 4) adhered to each face of the metal sheet (1) and made of an asbestos and nutrile rubber material

FIG.1.

EP 0 164 940 A1

M&C FOLIO: 799P48196                    WANGDOC: 0112L

## "IMPROVEMENTS RELATING TO CYLINDER HEAD GASKETS"

This invention relates to cylinder head gaskets for internal combustion engines.

The design characteristics of modern internal combustion engines are such that conventional gaskets even of embossed or corrugated formation often do not prove satisfactory under test. Typical problems which have to be overcome are:-

1.  The existence of a restricted available clamping load e.g. 50 lbs/ft per stud;

2.  An unusual stud pattern, e.g.

    (a) 5 studs along one side of the cylinder block, and

    (b) 4 studs along the other side in spite of a greater area to be sealed;

3.  A high compression ratio, e.g. 10.3 to 1;

4.  An extremely flexible cylinder head;

5.  A relatively small specified gasket thickness, for instance .030 inches after compression.

As a result of considerable research there has now been devised a cylinder head gasket which has been found to function most satisfactory in engines wherein the foregoing and other problems and conditions are manifest.

According to the invention therefore, an improved cylinder head gasket comprising a single metal sheet with cylinder bore, stud, and liquid flow openings therein is characterised firstly in that each cylinder bore opening is peripherally surrounded by a compressible metal ring, and secondly in that at least some of the other said openings are individually or collectively surrounded by flat rings (washers) made of asbestos and nitrile rubber material adhered to each face of the metal sheet.

Preferably the greater thickness metal portion around each cylinder bore opening is formed in the manner of an eyelet by turning over the metal sheet on itself so as to provide a local double layer of metal.

A typical gasket in accordance with the invention is hereinafter described by way of example and with reference to the accompanying drawings, in which:

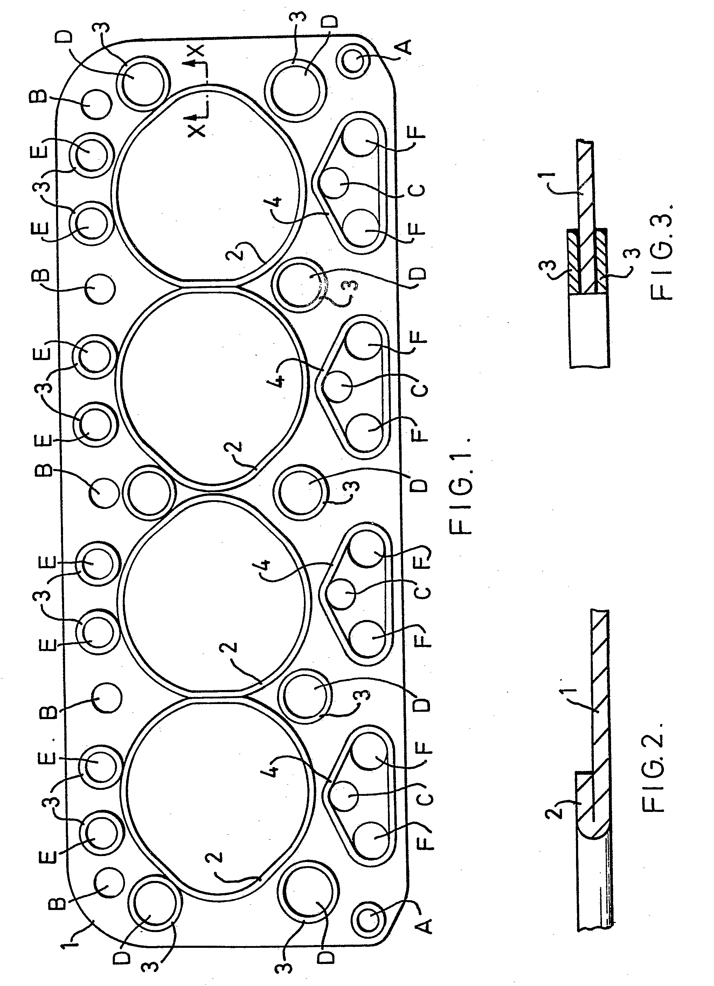

Fig. 1 is a plan view;

Fig. 2 is an enlarged section on line X-X of Fig. 1; and

Fig. 3 is a typical section through washers forming part of the gasket.

The gasket shown on the drawings has been devised for use with a British Leyland 'A' Series 998 cc four cylinder petrol engine wherein the problems mentioned in paragraph 2 of this specification were encountered and successfully overcome.

The gasket essentially comprises a substantially rectangular apertured steel sheet 1 within British Standard Specification BS 2920 1973 for tinned steel and of .015 inch thickness. Apart from the four pear-shaped cylinder bore openings the sheet has two high pressure oil flow openings A, one at each end near one side edge; five stud openings B near one side edge and four stud openings C near the other side edge; eight larger water flow openings D; eight smaller water flow openings E adjacent one side edge; and eight oil flow drain openings F near the other side edge and arranged in pairs flanking the stud openings C.

Around each cylinder bore opening the sheet 1 is turned through 180° in the manner of an eyelet to form a compressible ring 2 which thus doubles the gasket thickness around each such opening.

Additionally there is adhesively applied to both sides of the sheet 1 a plurality of flat washers 3, 4, some of which (3) are circular and closely surround all the openings, A, D and E whilst others (4) are somewhat triangular and surround a pair of openings F and an adjacent opening C. However shaped, each washer 3, 4 is .010 inches thick, of about .1 inch radial width and made of an asbestos-nitrile material such as that known under the Registered Trade Mark 'Velbestos' 250 or 260 and manufactured by Vellumoid Inc. of Worcester, Massachussets, U.S.A. Material of this kind is produced by a beater addition process and is of a highly uniform nature with a minimum of loose fibres. Such material has outstanding sealing properties, torque retention and an excellent resistance to petroleum fluids and lubricants, as well as water and glycol type coolants. It also has excellent dimensional stability and ageing properties and can be used at temperatures up to approximately 500°F.

Modifications could be made to the gasket as above described. Thus for instance the radial width of the washers could be altered and other hard steels such as low carbon steel, commonly known as stabilised or rimming steel could be used provided they have a hardness in the range 48-55 Rockwell Scale 4R 30.T and if non-foldable are provided with brazed-on washers to surround and seal the cylinder bore openings. The embodiment which has been described is however preferred for reasons of manufacture and economic convenience.

## CLAIMS

1.  A cylinder head gasket for internal combustion engines comprising a metal sheet with cylinder bore, stud, and liquid flow openings therein ,characterised firstly in that each cylinder bore opening is peripherally surrounded by a compressible metal ring and secondly in that at least some of the other said openings are individually or collectively surrounded by flat rings (washers) made of asbestos and nitrile rubber material adhered to each face of the metal sheet.

2.  A cylinder head gasket as claimed in claim 1, in which the compressible metal ring around each cylinder bore opening is achieved by turning over the metal sheet upon itself.

3.  A cylinder head gasket as claimed in claim 1 or claim 2 in which at least some of said washers are circular and each surround one only of said other openings.

4.  A cylinder head gasket as claimed in any of claims 1 to 3 in which at least some of said washers are of non-circular shape and surround more than one of said other openings.

FIG.1.

FIG.2.

FIG.3.

1/1

0164940

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 065 873 (LECHLER ELRING) * Whole document * | 1-4 | F 16 J 15/12 |
| Y | US-A-3 889 961 (R.G. FARNAM) * Whole document * | 1-4 | |
| Y | DE-C- 922 452 (LECHLER) * Whole document * | 1-4 | |
| A | PATENT ABSTRACTS OF JAPAN, vol. 5, no. 170, 29th October 1981, page (M-94) (842); & JP-A-56-94064 (OOTSUKA) 30-07-1981 | | |
| A | DE-U-8 214 030 (GOETZE) | | TECHNICAL FIELDS SEARCHED (Int. Cl.4) F 16 J 15/00 |

The present search report has been drawn up for all claims

| Place of search | Date of completion of the search | Examiner |
|---|---|---|
| BERLIN | 12-08-1985 | GERTIG I. |